# EUROPEAN PATENT APPLICATION

(11) **EP 2 515 535 A1**
(43) Date of publication of application: **24.10.2012**
(21) Application number: 09852200.6
(22) Date of filing: 18.12.2009
(51) Int. Cl.: H04N 7/16

(54) **METHOD AND SET TOP BOX FOR ACQUIRING PROGRAM CONTENT**

(71) Applicant: ZTE Corporation, Shenzhen, Guangdong 518057 (CN)
(72) Inventor: WANG, Jinggui, Guangdong 518057 (CN); YIN, Qin, Guangdong 518057 (CN); ZHANG, Xiaoqu, Guangdong 518057 (CN)
(74) Representative: Johnson, Richard Alan
(86) International application number: PCT/CN2009/075736
(87) International publication number: WO 2011/072462

(57) **Abstract**

The present invention discloses a method for acquiring program content and a set top box. The method comprises: an STB acquiring a downloading address corresponding to predetermined program content, wherein the predetermined program content is program content which the STB needs to download; and the STB downloading the predetermined program content according to the downloading address. The present invention solves the problem in related art that no implementation of video on demand service downloading function is provided, achieves active downloading of the STB and improves user experience.

## Description

### Field of the Invention

The present invention relates to the communication field, and particularly to a method for acquiring program content, and a set top box (STB).

### Background of the Invention

In a content distribution network (CDN) in the field of Internet protocol television (IPTV), serving ability of the system is generally evaluated on the basis of whether a streaming media server can provide services such as video on demand (VOD) and true video on demand (TVOD) (which is also referred to as real time video on demand), moreover, the experience of a user on functions and the serving level for the user are also important evaluation indices for measuring the serving ability of the system.

In general, the indices for evaluating and measuring the serving level of the services (such as VOD/TVOD) provided by the streaming media server comprises: the number of concurrent video streams, the quality of each video stream, bandwidth fluctuation, the average bandwidth being used, packet loss rate, average response time, etc. Except the above indices, the user also care whether the system can provide some enhanced functions, such as whether a downloading function is supported and so on. With the optimization of a private access network and the network reform of smart cells, the requirements of content downloading and local storage also increase continuously.

However, in related art, no implementation of video on demand service downloading (PUSH VOD) function is provided.

### Summary of the Invention

The present invention provides a method for acquiring program content and a set top box so as to solve the problem in related art that no implementation of video on demand service downloading function is provided.

A method for acquiring program content is provided in one aspect of the present invention, and the method comprises: an STB acquiring a downloading address corresponding to predetermined program content, wherein the predetermined program content is program content which the STB needs to download; and the STB downloading the predetermined program content according to the downloading address.

Preferably, the step of the STB acquiring the downloading address corresponding to the predetermined program content comprises: the STB acquiring a real time streaming protocol (RTSP) server address corresponding to the predetermined program content; and the STB sending an RTSP request to an RTSP server corresponding to the RTSP server address and receiving a file transfer protocol (FTP) server address corresponding to the predetermined program content from the RTSP server; the step of the STB downloading the predetermined program content according to the downloading address comprises: the STB initiating redirection toward an FTP server corresponding to the FTP server address and downloading the predetermined program content from the FTP server.

Preferably, after the step of the STB sending the RTSP request to the RTSP server corresponding to the RTSP server address, the method further comprises: the RTSP server receiving the RTSP request and applying for network bandwidth resources for the STB so as to establish a link between the STB and the FTP server; and in a situation that the RTSP server succeeds to apply for the network bandwidth resources for the STB, the RTSP server sending, to the STB, the FTP server address corresponding to the predetermined program content.

Preferably, the step of the STB acquiring the downloading address corresponding to the predetermined program content comprises: the STB acquiring program content list from a predetermined information source and selecting the predetermined program content from the program content list, wherein the predetermined information source comprises at least one of the following: an electronic program guide (EPG) and a user management platform; and the predetermined information source sending, to the STB, the downloading address corresponding to the predetermined program content.

Preferably, after the step of the STB downloading the predetermined program content according to the downloading address, the method further comprises: the STB notifying the predetermined information source that the STB has completed downloading of the predetermined program content; and the predetermined information source notifying a user of the STB to view the predetermined program content locally.

Preferably, before the step of the STB acquiring the program content list from the predetermined information source, the method further comprises: the STB initiating a request of acquiring the program content list to the predetermined information source; the predetermined information source sending a first inquiry message to the STB so as to inquire about whether the STB supports downloading of program content; and the STB sending an acknowledgement message to the predetermined information source, wherein the acknowledgement message represents that the STB supports the downloading of the program content.

Preferably, before the step of the STB selecting the predetermined program content from the program content list, the method further comprises: the predetermined information source sending a second inquiry message to the STB so as to inquire about whether the STB has already downloaded program content in the program content list; the STB sending a response message to the predetermined information source, wherein the response message carries information which indicates whether the program content in the program content list has already been downloaded; and the predetermined information source displaying the program content list according to the response message.

A set top box (STB) is provided in another aspect of the present invention, and the STB comprises: an acquisition module for acquiring a downloading address corresponding to predetermined program content, wherein the predetermined program content is program content which the STB needs to download; and a downloading module for downloading the predetermined program content according to the downloading address.

Preferably, the acquisition module comprises: a first acquisition unit for acquiring an RTSP server address corresponding to the predetermined program content; a sending unit for sending an RTSP request to an RTSP server corresponding to the RTSP server address; a first receiving unit for receiving an FTP server address corresponding to the predetermined program content from the RTSP server; the downloading module comprises: a redirection unit for initiating redirection toward an FTP server corresponding to the FTP server address; and a downloading unit for downloading the predetermined program content from the FTP server.

Preferably, the acquisition module comprises: a second acquisition unit for acquiring program content list from a predetermined information source and selecting the predetermined program content from the program content list, wherein the predetermined information source comprises at least one of the following: an EPG and a user management platform; and a second receiving unit for receiving the downloading address corresponding to the predetermined program content from the predetermined information source.

By way of the present invention, the STB acquires a downloading address corresponding to program content which needs to be downloaded and downloads this program content according to the downloading address, which solves the problem in related art that no implementation of video on demand service downloading function is provided, achieves the active downloading of the STB and improves user experience.

### Brief Description of the Drawings

The drawings illustrated here provide a further understanding of the present invention and form a part of the present application. The exemplary embodiments and the description thereof are used to explain the present invention without unduly limiting the scope of the present invention. In the drawings:
Fig. 1 is a flowchart of a method for acquiring program content according to an embodiment of the present invention;
Fig. 2 is a detailed flowchart of inquiring for content to be downloaded according example 1 of the present invention;
Fig. 3 is a detailed flowchart of a content downloading process according example 2 of the present invention;
Fig. 4 is a structural block diagram of a set top box according to an embodiment of the present invention;
Fig. 5 is a detailed structural block diagram of the set top box according to an embodiment of the present invention;
Fig. 6 is another detailed structural block diagram of the set top box according to an embodiment of the present invention; and
Fig. 7 is a schematic diagram of the set top box and an application scenario thereof according to example 3 of the present invention.

### Detailed Description of Embodiments

The present invention will be described hereinafter in detail with reference to the accompanying drawings and in conjunction with embodiments. It needs to note that the embodiments of the present application and the features in the embodiments can be combined with each other if there is no conflict.

### Method Embodiments

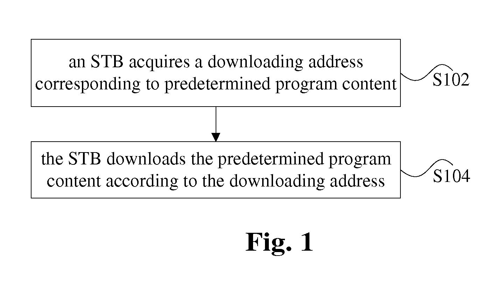

A method for acquiring program content is provided according to an embodiment of the present invention. Fig. 1 is a flowchart of a method for acquiring program content according to the embodiment of the present invention, and as shown in Fig. 1, this method comprises the following steps S102 to S104:
S102: an STB acquires a downloading address corresponding to predetermined program content, wherein the predetermined program content is program content which the STB needs to download; and
S104: the STB downloads the predetermined program content according to the downloading address.

By way of the above process, active downloading of program content by the STB is achieved. The active downloading of program content before the user views the program can reduce the waiting time for the user to view the program and improve user experience.

Preferably, the step of the STB acquiring the downloading address corresponding to the predetermined program content comprises: the STB acquiring a real time streaming protocol (RTSP) server address corresponding to the predetermined program content; and the STB sending an RTSP request to an RTSP server corresponding to the RTSP server address and receiving a file transfer protocol (FTP) server address corresponding to the predetermined program content from the RTSP server; and the STB downloading the predetermined program content according to the downloading address comprises: the STB initiating redirection toward an FTP server corresponding to the FTP server address and downloading the predetermined program content from the FTP server.

By way of this process, various video on demand contents are pushed (PUSH) into an authorized set top box user in advance through an RTSP server and an FTP server, and the set top box stores the video on demand contents for subsequent video on demand service.

Preferably, after the STB sends the RTSP request to the RTSP server corresponding to the RTSP server address, the RTSP server receives the RTSP request and applies for network bandwidth resources for the STB so as to establish a link between the STB and the FTP server; in the situation that the RTSP server succeeds to apply for the network bandwidth resources for the STB, the RTSP server sends, to the STB, the FTP server address corresponding to the predetermined program content. In this method, the RTSP server manages an accessed user, and sends the FTP server address to this user so as to allow this user to download only in the situation that the application for the network bandwidth resources for this user is successful, which achieves the balance of network load.

Preferably, the step of the STB acquiring the downloading address corresponding to the predetermined program content comprises: the STB acquiring a program content list from a predetermined information source and selecting the predetermined program content from the program content list, wherein the predetermined information source comprises at least one of the following: an electronic program guide (EPG) and a user management platform; and the predetermined information source sending, to the STB, the downloading address corresponding to the predetermined program content. That is to say, the STB can acquire the program content list and the downloading address from the EPG and/or the user management platform (which can be constructed by Java Script), and can also obtain the above information from other medium.

Preferably, after the STB downloads the predetermined program content according to the downloading address, the STB notifies the predetermined information source that the STB has completed downloading of the predetermined program content; and the predetermined information source notifies a user of the STB to view the predetermined program content locally. The set top box ends the content pull-down procedure, i.e. after relevant content (i.e. predetermined program content) is stored in the set top box, this predetermined program content can be recorded, and the user can start a relevant video on demand service subsequently; since the content on demand already exists at the local of the user, it can be viewed without waiting, which improves user experience.

Preferably, before the STB acquires the program content list from the predetermined information source, the STB initiates a request of acquiring the program content list toward the predetermined information source; the predetermined information source sends a first inquiry message to the STB so as to inquire about whether the STB supports the downloading of the program content; and the STB sends an acknowledgement message to the predetermined information source, wherein the acknowledgement message represents that the STB supports the downloading of the program content. By way of this process, whether the STB supports a downloading function is verified, if it supports the downloading function, then a downloadable program content list is displayed, otherwise, the downloadable program content list is not displayed, which prevents the STB which does not support the downloading function from selecting a program and downloading the same and prevents the situation which causes resource waste from happening.

Preferably, before the STB selects the predetermined program content from the program content list, the predetermined information source sends a second inquiry message to the STB so as to inquire about whether the STB has already downloaded the program content in the program content list; the STB sends a response message to the predetermined information source, wherein the response message carries information which indicates whether the program content in the program content list has already been downloaded; and the predetermined information source displays the program content list according to the response message. By way of this process, the STB repetitively downloading the already downloaded program content can be prevented. The above display manner can be set by an administrator, for example, the downloaded program becomes gray or not to display the already downloaded program, and so on.

The implementation of the embodiments of the present invention will be described in detail in conjunction with examples hereinafter.

During practical application, the implementation process of the embodiments of the present invention can comprise two aspects of inquiry of the content to be downloaded and the interaction procedure of content downloading, which will be described hereinafter respectively.

### Example 1

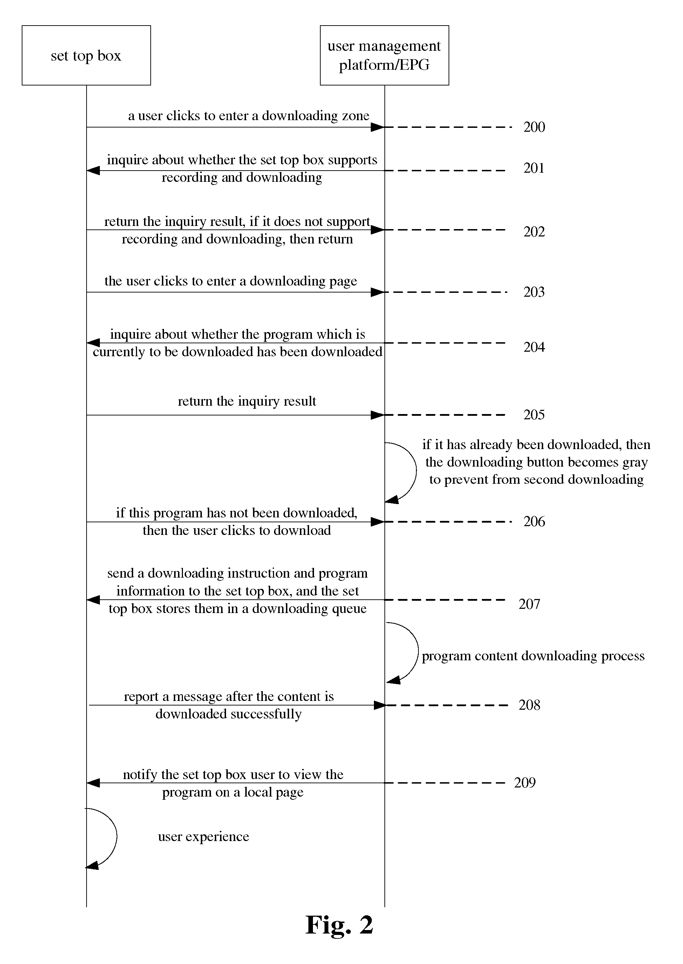

This example describes an inquiry process of content to be downloaded in detail. Fig. 2 is a detailed flowchart of inquiring for content to be downloaded according example 1 of the present invention, which mainly comprises an inquiry process before the downloading and an inquiry process after the downloading. The inquiry process before the downloading will be introduced first, which comprises the steps as follows.

Step 200: a set top box user clicks to enter a downloading zone and searches and inquires for a downloading link of relevant content.

Step 201: after receiving a request of the user, a user management platform/EPG initiates an inquiry about whether the set top box supports recording and downloading.

Step 202: the set top box returns an inquiry result, if it does not support recording and downloading, then return.

Step 203: the set top box user clicks a program to enter a downloading page and requests to download a video on demand content.

Step 204: the user management platform/EPG inquires about whether the program to be downloaded currently has already been downloaded.

Step 205: the set top box returns the inquiry result to indicate whether the program has already been downloaded locally. If it has already been downloaded, then the user management platform/EPG side interface becomes gray.

Step 206: if this program has not been downloaded, then the user clicks to download.

Step 207: the user management platform/EPG sends downloading information to the set top box, and the set top box stores the same in a downloading queue, wherein the downloading information can comprise downloading address and can also comprise a downloading signaling and program information.

The inquiry process after the downloading is completed comprises the steps as follows.

Step 208: the set top box user reports a message to the user management platform/EPG after the content is downloaded successfully so as to notify the user management platform/EPG that this set top box user has completed the downloading.

Step 209: the user management platform/EPG notifies the set top box user to view and experience the program on a local page.

### Example 2

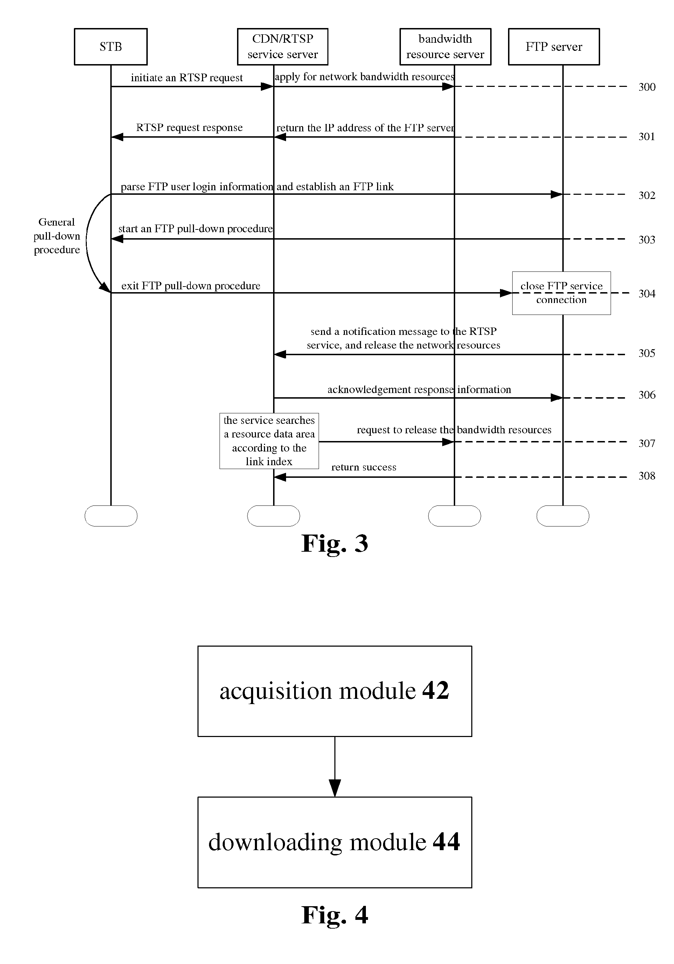

This example describes the flow of content downloading in detail. Fig. 3 is a detailed flowchart of a content downloading process according example 2 of the present invention, and as shown in Fig. 3, this process comprises the steps as follows.

Step 300: according to an RTSP server address (i.e. service server address) provided by an EPG, a terminal set top box (STB) sends, to a service server, an RTSP request (DESCRIBE) for downloading program content so as to acquire an FTP server address, preferably, it is further used to acquire user password and content catalog. After receiving the request, the service server (i.e. RTSP server) applies for network bandwidth resources toward a bandwidth resource server so as to achieve the balance of network load and control the downloading rate within a configurable range.

Step 301: after receiving a response from the bandwidth resource server about applying for the network bandwidth resources, the service server determines whether the application is successful, if it is successful, then the service server returns an RTSP response (DESCRIBE) to the terminal set top box, wherein the RTSP response carries the FTP server address and can also carry user password information.

Step 302: the terminal set top box (STB) parses the information included in the RTSP response, initiates a redirection according to the address of the FTP downloading server, which can provide downloading service, returned by the service server, starts an FTP request to the FTP downloading server, establishes an FTP conversation link, and logs in a content catalog of the FTP server.

Step 303: an FTP pull-down (i.e. downloading) procedure is started.

Step 304: after the content pull-down is ended, the terminal set top box (STB) exits the FTP pull-down procedure, and ends this pull-down procedure.

The following steps 305 to 308 are preferable steps, which are mainly used for completing the control procedure of network resources.

Step 305: when receiving closing of the FTP connection, the FTP downloading server (i.e. FTP server) sends a notification message to the RTSP service server (i.e. RTSP server, also referred to as service server) to apply for releasing the network bandwidth resources.

Step 306: the RTSP service server sends an acknowledgement response message.

Step 307: an RTSP service server process searches a network resource data area used by the current user according to a link index and applies for releasing the bandwidth resources toward a bandwidth resource management module (i.e. bandwidth resource server).

Step 308: after receiving the application for releasing the bandwidth resources, the bandwidth resource management module releases the network resources and returns a success message to the RTSP service server.

The above method can be applied in a system where a media server accesses the set top box in the IPTV system. According to the request of the user, the set top box completes the interaction with EPG and/or user management platform, RTSP server, and FTP server. When pulling down the content, the media server (comprising RTSP server and FTP server) transfers a blade server address and a connection address of the requested content to the set top box, which can shorten the waiting time required when the user selects video on demand content and reduce the network load, thereby efficiently providing video on demand service to the user, and it also helps a lot to solve the terminal concurrent connection problem in the IPTV system and improve communication efficiency.

### Apparatus embodiments

A set top box (STB) is provided according to an embodiment of the present invention. Fig. 4 is a structural block diagram of a set top box according to the embodiment of the present invention, and as shown in Fig. 4, this set top box comprises: an acquisition module **42** for acquiring a downloading address corresponding to predetermined program content, wherein the predetermined program content is program content which the STB needs to download; and a downloading module **44,** coupled with the acquisition module **42,** for downloading the predetermined program content according to the downloading address.

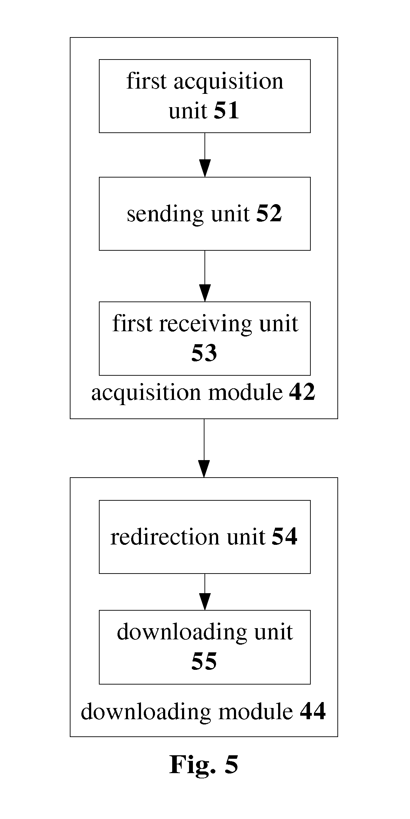

Fig. 5 is a detailed structural block diagram of the set top box according to an embodiment of the present invention. As shown in Fig. 5, on the basis of Fig. 4, the acquisition module **42** comprises: a first acquisition unit **51** for acquiring an RTSP server address corresponding to the predetermined program content; a sending unit **52,** coupled with the first acquisition unit **51,** for sending an RTSP request to an RTSP server corresponding to the RTSP server address; a first receiving unit **53,** coupled with the sending unit **52,** for receiving an FTP server address corresponding to the predetermined program content from the RTSP server; and the downloading module **44** comprises: a redirection unit **54** for initiating redirection toward an FTP server corresponding to the FTP server address; and a downloading unit **55,** coupled with the redirection unit **54,** for downloading the predetermined program content from the FTP server.

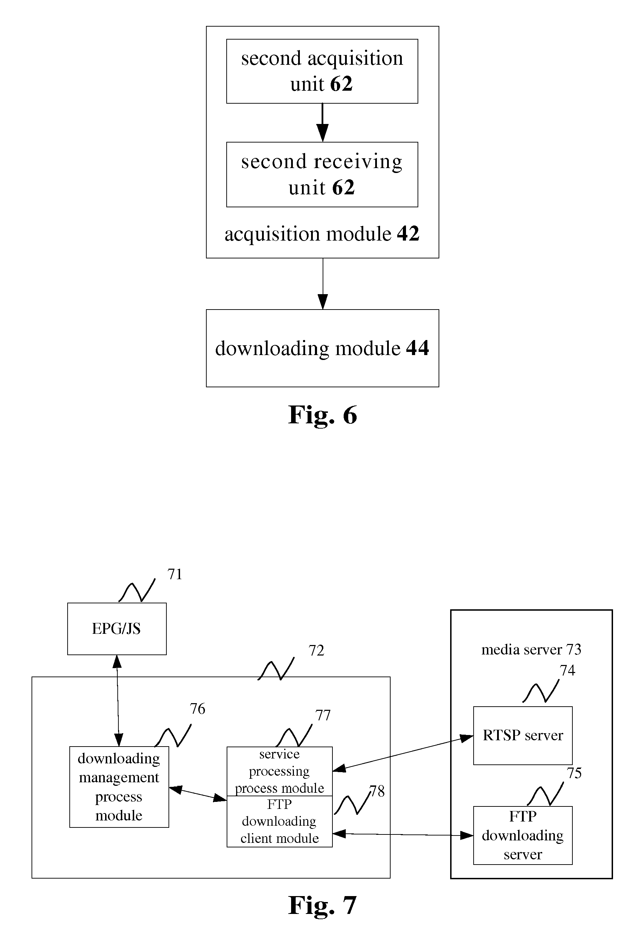

Fig. 6 is another detailed structural block diagram of the set top box according to an embodiment of the present invention. As shown in Fig. 6, on the basis of Fig. 4, the acquisition module **42** comprises: a second acquisition unit **62** for acquiring a program content list from a predetermined information source and selecting the predetermined program content from the program content list, wherein the predetermined information source comprises at least one of the following: an EPG and a user management platform; and a second receiving unit **64,** coupled with the second acquisition unit **62,** for receiving the downloading address corresponding to the predetermined program content from the predetermined information source.

It needs to note that the set top box described in the apparatus embodiments is corresponding to the above method embodiments, and its particular implementing method has been described in detail in the method embodiments, which will not be described here redundantly.

### Example 3

This example describes a set top box provided by the embodiments of the present invention and an application environment of the set top box in detail. Fig. 7 is a schematic diagram of the set top box and an application scenario thereof according to example 3 of the present invention. As shown in Fig. 7, this scenario comprises:
an EPG program management system **71,** comprising an EPG and/or a user management platform, wherein the user management platform can be constructed by using Java Script, therefore, this portion is also referred to as EPG/JS and responsible for program management;
a media server **73,** comprising a service processing server **74** (also referred to as RTSP server) and an FTP server **75;** and
a set top box downloading terminal **72,** i.e. STB, comprising a downloading management process module **76,** a service processing process module **77** and an FTP downloading client module **78.** Wherein, the downloading management process module **76** completes the interaction with JS/EPG **71** and obtains downloadable video on demand content; the service processing process module **77** is responsible for initiating an RTSP request for downloading program content toward the service server **74** in the media server **73,** completing the signaling interaction with the service server (also referred to as CDN/RTSP service server) **74,** and selecting a media serving blade which is responsible for serving; and the FTP downloading client module **78** is used for initiating an FTP downloading request toward the FTP server **75,** and after the downloading is completed, the set top box downloading terminal **72** stores the downloads to the local and then a user play procedure can be started.

The downloading content inquiry process in the method embodiments is mainly completed by JS/EPG **71** and the set top box downloading terminal **72.** In the interaction procedure of content downloading, the procedure of network load balancing is completed by the service processing process module **77** and service processing server **74.** The actual downloading procedure is achieved by the interaction between the FTP downloading client module **78** and the FTP server **75._{F}**

In summary, the program content acquisition solution provided by the embodiments of the present invention can shorten the waiting time acquired when the user selects video on demand content, reduce the network load, and achieve the balancing of bandwidth load, thereby efficiently providing the video on demand service and being able to provide better video on demand effects for the user.

It needs to note that the steps shown in the flowcharts of the drawings can be executed in a computer system such as a set of computer executable instructions, and although the logical order is shown in the flowcharts, in some cases the steps shown or described here can be executed in an order different from this in some circumstances.

Apparently, those skilled in the art shall understand that the above-mentioned modules and steps of the present invention can be realized by using general purpose calculating device, can be integrated in one calculating device or distributed on a network which consists of a plurality of calculating devices, and alternatively they can be realized by using the executable program code of the calculating device, consequently they can be stored in the storing device and executed by the calculating device, or they are made into integrated circuit module respectively, or a plurality of modules or steps thereof are made into one integrated circuit module. In this way, the present invention is not limited to any particular combination of hardware and software.

Above description is only to illustrate the preferable embodiments but not to limit the present invention. Various alternations and changes to the present invention are apparent to those skilled in the art. The scope defined in claims shall comprise any modification, equivalent substitution and improvement made within the spirit and principle of the present invention.

## Claims

1. A method for acquiring program content, **characterized by** comprising:
a set top box (STB) acquiring a downloading address corresponding to predetermined program content, wherein the predetermined program content is program content which the STB needs to download; and
the STB downloading the predetermined program content according to the downloading address.

2. The method according to Claim 1, **characterized in that**
the step of the STB acquiring the downloading address corresponding to the predetermined program content comprises:
the STB acquiring a real time streaming protocol (RTSP) server address corresponding to the predetermined program content; and
the STB sending an RTSP request to an RTSP server corresponding to the RTSP server address and receiving a file transfer protocol (FTP) server address corresponding to the predetermined program content from the RTSP server;
the step of the STB downloading the predetermined program content according to the downloading address comprises:
the STB initiating redirection toward an FTP server corresponding to the FTP server address and downloading the predetermined program content from the FTP server.

3. The method according to Claim 2, **characterized in that** after the step of the STB sending the RTSP request to the RTSP server corresponding to the RTSP server address, the method further comprises:
the RTSP server receiving the RTSP request and applying for network bandwidth resources for the STB so as to establish a link between the STB and the FTP server; and
in a situation that the RTSP server succeeds to apply for the network bandwidth resources for the STB, the RTSP server sending, to the STB, the FTP server address corresponding to the predetermined program content.

4. The method according to Claim 1, **characterized in that** the step of the STB acquiring the downloading address corresponding to the predetermined program content comprises:
the STB acquiring program content list from a predetermined information source and selecting the predetermined program content from the program content list, wherein the predetermined information source comprises at least one of the following: an electronic program guide (EPG) and a user management platform; and
the predetermined information source sending, to the STB, the downloading address corresponding to the predetermined program content.

5. The method according to Claim 4, **characterized in that** after the step of the STB downloading the predetermined program content according to the downloading address, the method further comprises:
the STB notifying the predetermined information source that the STB has completed downloading of the predetermined program content; and
the predetermined information source notifying a user of the STB to view the predetermined program content locally.

6. The method according to Claim 4, **characterized in that** before the step of the STB acquiring the program content list from the predetermined information source, the method further comprises:
the STB initiating a request of acquiring the program content list to the predetermined information source;
the predetermined information source sending a first inquiry message to the STB so as to inquire about whether the STB supports downloading of program content; and
the STB sending an acknowledgement message to the predetermined information source, wherein the acknowledgement message represents that the STB supports the downloading of the program content.

7. The method according to Claim 4, **characterized in that** before the step of the STB selecting the predetermined program content from the program content list, the method further comprises:
the predetermined information source sending a second inquiry message to the STB so as to inquire about whether the STB has already downloaded program content in the program content list;
the STB sending a response message to the predetermined information source, wherein the response message carries information which indicates whether the program content in the program content list has already been downloaded; and
the predetermined information source displaying the program content list according to the response message.

8. A set top box (STB), **characterized by** comprising:
an acquisition module for acquiring a downloading address corresponding to predetermined program content, wherein the predetermined program content is program content which the STB needs to download; and
a downloading module for downloading the predetermined program content according to the downloading address.

9. The STB according to Claim 8, **characterized in that**
the acquisition module comprises:
a first acquisition unit for acquiring a real time streaming protocol (RTSP) server address corresponding to the predetermined program content;
a sending unit for sending an RTSP request to an RTSP server corresponding to the RTSP server address;
a first receiving unit for receiving a file transfer protocol (FTP) server address corresponding to the predetermined program content from the RTSP server;
the downloading module comprises:
a redirection unit for initiating redirection toward an FTP server corresponding to the FTP server address; and
a downloading unit for downloading the predetermined program content from the FTP server.

10. The STB according to Claim 8, **characterized in that** the acquisition module comprises:
a second acquisition unit for acquiring program content list from a predetermined information source and selecting the predetermined program content from the program content list, wherein the predetermined information source comprises at least one of the following: an electronic program guide (EPG) and a user management platform; and
a second receiving unit for receiving the downloading address corresponding to the predetermined program content from the predetermined information source.
